# EUROPÄISCHE PATENTSCHRIFT

(11) **EP 2 207 609 B1**
(45) Veröffentlichungstag und Bekanntmachung des Hinweises auf die Patenterteilung: **16.03.2011**
(21) Anmeldenummer: 08848998.4
(22) Anmeldetag: 10.11.2008
(51) Int. Cl.: B01D 29/11, B01D 35/12

(54) **FILTERVORRICHTUNG**
FILTER DEVICE
DISPOSITIF DE FILTRATION

(30) Priorität: 16.11.2007 DE 102007054737
(43) Veröffentlichungstag der Anmeldung: 21.07.2010
(73) Patentinhaber: Hydac Process Technology GmbH, 66538 Neunkirchen (DE)
(72) Erfinder: WNUK, Ralf, 66450 Bexbach/Kleinottweiler (DE); GERSTNER, Jörg, Hermann, 66346 Püttlingen (DE); SCHLICHTER, Bernhard, 66123 Saarbrücken (DE)
(74) Vertreter: Bartels, Martin Erich Arthur
(86) Internationale Anmeldenummer: PCT/EP2008/009455
(87) Internationale Veröffentlichungsnummer: WO 2009/062644

(56) Entgegenhaltungen:
- EP-A- 0 062 549
- EP-A- 0 656 223
- DE-A1-102005 016 151
- US-A- 3 318 452

## Beschreibung

Die Erfindung betrifft eine Filtervorrichtung mit einer Mehrzahl von Filterelementen gemäß der Merkmalsausgestaltung des Oberbegriffs des Patentanspruches 1.

Durch die DE 199 56 859 A1 ist eine Filtervorrichtung bekannt, die konisch ausgebildete Filterelemente aufweist, insbesondere in Form von sog. Spaltsiebrohrfilterelementen. Aufgrund der konischen Ausbildung ist der Abstand zwischen den einzelnen konischen Spaltsiebrohrfilterelementen bereichsweise vergrößert, mit der Folge, dass auch der Ausströmraum im Filtergehäuse vergrößert ist. Beim Rückspülen ist das konische Filterelement gegenüber einem zylindrischen eindeutig im Vorteil. Ursache hierfür ist in erster Linie der relativ größere Austrittsquerschnitt der konischen Filterelemente gegenüber zylindrischen bei gleicher Filteroberfläche. Da der Austrittsquerschnitt bei den konischen Filterelementen gegenüber dem durch die Filteroberfläche gebildeten Eintrittsquerschnitt, also der freien Elementfläche, jedoch klein ist, bildet sich hier abhängig von der Größe des Strömungswiderstandes des Spaltrohres ein Engpass, in dem ein großer Teil des Systemdruckes abfällt. Es treten also geringere Druckverluste auf, was energetisch beim Rückspülen günstiger ist.

Beim Rückspülen wird ein Großteil des Volumendurchsatzes bei konischen und auch bei zylindrischen Filterelementen grundsätzlich am unteren Filterende erzielt. Die Volumenströme nehmen dann sehr schnell ab. Zusätzlich ist bei konischen Elementen der Geschwindigkeitsgradient geringer, so dass unter Einbeziehung der Geschwindigkeitsprofile, bezogen auf die Filteroberfläche, sich aufgrund der Elementkonizität ein zusätzlicher Reinigungseffekt gegenüber zylindrischen Elementen ergibt. Durch die erreichte, im wesentlichen konstante Geschwindigkeit bei der Abreinigung der konischen Filterelemente erfolgt dies schonend, was die Standzeit dahingehender Filterelemente verlängert.

Beim Rückspülen werden vorzugsweise alle Filterelemente nacheinander regeneriert. Während der Rückspülung einzelner Elemente wird die Filtration über die restlichen Elemente fortgesetzt, so dass der Filtrationsbetrieb zu keiner Zeit unterbrochen wird.

Bei der bekannten Filtervorrichtung erfolgt der Rückspülvorgang nicht ausschließlich in der Weise, dass der in der Filtervorrichtung anstehende Überdruck während der Rückspülphase einen Teilstrom des Filtrates das zu reinigende Filterelement in umgekehrter Richtung durchströmen lässt, um den Schmutz vom Element abzulösen und auszutragen, sondern, in dem Bestreben, auch hartnäckigste Verschmutzungen entfernen zu können, ist zur Unterstützung der Rückspülung eine Drucksteuereinrichtung vorhanden, die an dem jeweils rückzuspülenden Filterelement einen Unterdruck erzeugt. Für die Rückspülung ist daher nicht nur der Systemdruck wirksam, sondern es steht durch den angelegten Unterdruck ein höherer Druckgradient zum Ablösen von Verschmutzungen zur Verfügung.

Bei der bekannten Vorrichtung weist die Unterdruckeinrichtung einen Hydrospeicher in Form eines Membranspeichers auf, wobei die das Trennelement des Speichers bildende Membran für eine Saug- oder Pumpbewegung an die Kolbenstange eines Arbeitszylinders angeschlossen ist. Für eine derartige Betätigung ist nicht nur ein beträchtlicher Steuerungsaufwand erforderlich, sondern, um Betriebssicherheit zu gewährleisten, ist auch eine aufwändige Bauweise des Membranspeichers mit Kolbenstangendurchführung und deren Abdichtung erforderlich. Trotz kostenintensiver Bauweise sind ausreichend lange, Betriebssicherheit gewährleistende Betriebszeitdauern kaum erreichbar. Zudem ist beträchtlicher Bauraum für den Speicher und die Antriebseinrichtung erforderlich.

Durch die DE 10 2005 016 151 A1 ist eine Filtervorrichtung mit einem Gehäuse sowie einem Filtereinlaß für das zu filtrierende Fluid bekannt unter Einbezug eines Filterauslasses für das filtrierte Fluid. Innerhalb des Filtergehäuses sind mehrere Filterelemente angeordnet, wobei das jeweilige Filterelement eine mit dem Filtereinlaß in Fluidverbindung stehende erste Durchlaßöffnung aufweist und das während eines Filtrationsvorganges von innen nach außen von dem verschmutzten Fluid durchströmt wird. Ferner ist ein bewegbarer Spülarm mit einer Fluidöffnung für rückgespültes verschmutztes Fluid vorgesehen, der mit der ersten Durchlaßöffnung des Filterelementes in Fluidverbindung bringbar ist, wodurch eine Rückspülströmung von außen in das Innere des Filterelementes entsteht. Dadurch, dass das jeweilige Filterelement eine zweite Durchlaßöffnung aufweist und eine Ventileinheit vorhanden ist, die beim Filtrationsvorgang die zweite Durchlaßöffnung verschließt und beim Rückspülvorgang öffnet, entsteht durch das Öffnen der Ventileinheit beim Rückspülvorgang eine zweite Zugangsmöglichkeit des rückgespülten Fluids über die zweite Durchlaßöffnung, die für den Erhalt hoher Abreinigungsgrade beim Rückspülvorgang eine zusätzliche Rückspülströmung innerhalb des Filterelementes ermöglicht.

Durch die DE 100 24 401 A1 ist eine gattungsgemäße Rückspülfiltervorrichtung bekannt, insbesondere für die Schmierölfiltrierung, mit im Filtergehäuse um eine Drehwelle angeordneten, an beiden Enden offenen Filterkerzen, deren Innenraum im Filtrierbetrieb mit einer in den Rückspülfilter einströmenden Trübe beaufschlagbar ist und mit einer mittels der Drehwelle bewegten Reinigungseinrichtung, die für die Einzel- oder Gruppenreinigung der Filterkerzen im Rückspülbetrieb mindestens zwei über die Drehwelle mit einem Ablaßventil in Verbindung stehende sog. Spülküken aufweist, wobei das erste Spülküken der einen Filterkerzenendseite und das andere Spülküken der anderen Filterkerzenendseite zugeordnet ist. Dadurch, dass das erste Spülküken um einen Winkel in Drehrichtung versetzt zu dem zweiten Spülküken angeordnet ist und dem ersten und zweiten Spülküken für die gegenüberliegende Filterkerzenendseite ein mitbewegtes erstes und zweites Verschlußglied zugeordnet ist, wird durch den angesprochenen Versatz der Spülküken um einen Winkel in Drehrichtung es ermöglicht, dass die Filterkerzen zeitversetzt an beiden Einströmenden mit dem Spüldruck beaufschlagt werden, so dass mit diesem zeitversetzten gegensinnigen Rückspülen höhe Spülgeschwindigkeiten bzw. Geschwindigkeitsprofile über die Filtereinsatzhöhe erzielt werden, was sich insbesondere in mittleren Bereichen zwischen den Einströmenden aufgrund der dort wirkenden höheren Spülgeschwindigkeiten für eine verbesserte Spülwirkung günstig auswirkt.

Im Hinblick auf diesen Stand der Technik stellt sich die Erfindung die Aufgabe, eine Filtervorrichtung zur Verfügung zu stellen, die neben guten Filtrationsleistungen auch mit verbesserten Rückspülwerten aufwarten kann und die sich sowohl durch eine besonders einfache Bauweise als auch eine hohe Betriebssicherheit im Langzeitbetrieb auszeichnet.

Erfindungsgemäß ist diese Aufgabe durch eine Filtervorrichtung gelöst, die die Merkmale des Patentanspruches 1 in seiner Gesamtheit aufweist.

Dadurch, dass gemäß dem kennzeichnenden Teil des Patentanspruches 1 das Absperrelement ein mittels eines Hydrokolbens ansteuerbares, schnell schließendes Plattenventil ist, das derart rasch die genannte Fluidverbindung sperrt, dass in der Art eines Druckschlages am rückgespülten Filterelement eine Nachsaugwirkung entsteht, die die Abreinigung von Verschmutzungen am Filterelement erhöht, ist eine verbesserte Abreinigung beim Rückspülen des jeweiligen Filterelementes erreicht. Durch die spezielle Ausgestaltung des Absperrelementes kommt es bei der vor dem Rückspülvorgang in das Filterelement eintretenden Fluidströmung zu einer abrupten Strömungsunterbrechung, so dass die beim Absperrvorgang herrschende Strömungsgeschwindigkeit als strömungsdynamischer Effekt eine sehr starke Nachsaugwirkung hervorruft. Für die gegenüber der Filtration umgekehrte Durchströmung des Filterelementes steht daher nicht nur der Systemdruck an der Reinseite des betreffenden Filterelementes zur Verfügung, sondern das Rückströmen von Filtrat wird durch die Nachsaugwirkung verstärkt, die aufgrund des angesprochenen dynamischen Effekts zur Verfügung steht, der sich durch das schlagartige Sperren der Strömung ergibt, die von der Schmutzseite her einströmt. Mit der erfindungsgemäßen Lösung entsteht eine Art Druckschlagfunktion, deren Wirkung noch verbessert wird, sofern konische Filterelemente eingesetzt werden. Letztere bewirken dann eine Nachsaugwirkung gleichermaßen über das gesamte Element und nicht nur, wie im Stand der Technik aufgezeigt, in definierten Mittenbereichen.

Das eingesetzte Plattenventil als Absperrelement der Drucksteuereinrichtung ermöglicht eine besonders einfache und in der Herstellung günstige Bauweise. Ferner benötigt das Plattenventil wenig Einbauraum und läßt sich insoweit auch ohne Schwierigkeiten in das Filtergehäuse integrieren. Zudem ist die Betriebssicherheit über praktisch unbegrenzte Betriebszeiten gewährleistet.

Vorzugsweise weisen die Filterelemente einen inneren Filterhohlraum auf, der eine Längsachse definiert, die sich zwischen einer endseitigen, bei der Filtration mit dem Filtereinlass verbundenen Eingangsöffnung und einer dazu entgegengesetzten endseitigen Abführöffnung erstreckt, über die beim Rückspülen verschmutztes Fluid abführbar ist, wobei die Eingangsöffnung des abzureinigenden Filterelementes für die Rückspülung mittels des Absperrelementes absperrbar ist, und wobei vorzugsweise mit vertikaler Längsachse im Filtergehäuse angeordnete Filterelemente mit sich nach oben konisch verjüngter Gestalt vorgesehen sind, was, wie bereits eingangs erwähnt, unter anderem die Effizienz der Rückspülung begünstigt und zwar über das gesamte Element gesehen.

Bei vorteilhaften Ausführungsbeispielen ist die Abführöffnung des abzureinigenden Filterelementes mit einer Rückspülleitung verbindbar, die mittels einer Ventileinrichtung wahlweise sperrbar oder freigebbar ist. Dadurch ergibt sich die zusätzliche Möglichkeit der Steuerung der Strömung im Abströmbereich des verschmutzten Fluides. Insbesondere, wenn hierbei die Anordnung so getroffen ist, dass die Rückspülleitung eine Länge besitzt, die größer oder wesentlich größer ist als die in Richtung der Längsachse gemessene Länge der Filterelemente, läßt sich durch Steuerung der Strömungsgeschwindigkeit einer verhältnismäßig langen Fluidsäule ein eine besonders starke Nachsaugwirkung entfaltender dynamischer Effekt und damit eine besonders wirksame Abreinigung erzielen.

Bei bevorzugten Ausführungsbeispielen weist die Rückspüleinrichtung einen bewegbaren, mittels einer Antriebseinrichtung mit der Abführöffnung des abzureinigenden Filterelementes verbindbaren Rückspülarm auf, und das Absperrelement ist im Zuge der Bewegung des Rückspülarmes mittels der Antriebseinrichtung auf die Eingangsöffnung des mit dem Rückspülarm verbundenen Filterelementes ausrichtbar, um den Fluideintritt in dessen Filterhohlraum freizugeben oder zu sperren.

Nachstehend ist die Erfindung anhand eines in der Zeichnung dargestellten Ausführungsbeispieles im Einzelnen erläutert. Es zeigen:
- Fig. 1 in prinzipieller und nicht maßstäblicher Darstellung eine Ausführungsform der Erfindung im Längsschnitt;
- Fig. 2 einen gegenüber Fig. 2 vergrößerten Ausschnitt entsprechend dem in Fig. 1 mit II angegebenen Bereiches;
- Fig. 3 einen schematisch stark vereinfacht und in der Vertikalrichtung stark verkürzt gezeichneten Teilausschnitt der Vorrichtung, wobei ein zur Rückspülung vorbereitetes Filterelement und die dieses durchströmende Fluidströmung schematisiert angedeutet sind, und
- Fig. 4 eine der Fig. 3 ähnliche Darstellung zur Verdeutlichung der beim eigentlichen Rückspülvorgang herrschenden Fluidströmung.

Die in den Fig. gezeigte Filtervorrichtung weist ein zylindrisches Gehäuse 1 mit einem oberen Ab*schlußdeckel 3, einem unteren Gehäuseabschluß 5 und einem in dem dazwischen liegenden Bereich befindlichen Zwischenboden 7 auf, die sämtlich über Flanschverbindungen 9 an dem Filtergehäuse 1 festlegbar sind. Der Zwischenboden 7 trennt im Gehäuse 1 einen Raum 11 für Unfiltrat, in den zu filtrierendes Fluid über einen Filtereinlass 13 einströmbar ist, von der Reinseite 15 der Filtervorrichtung, woraus gefiltertes Fluid über ein Filterauslass 17 abführbar ist.

Zwischen dem Zwischenboden 7 und einer am unteren Gehäuseabschluss 5 befindlichen Elementaufnahme 19 sind nach oben hin konisch zulaufende Filterelemente 21 eingesetzt, wobei an die Stelle der konischen Filterelemente 21 auch zumindest teilweise zylindrische Filterelemente (nicht dargestellt) treten können. Die angesprochenen konischen Filterelemente 21, die aus sogenannten Spaltsiebrohrfilterelementen bestehen können, sind in Abständen voneinander entlang eines zylindrischen Kreisbogens innerhalb des Filtergehäuses 1 angeordnet. Bei einer nicht näher dargestellten Ausführungsform können auch in Gruppen unterteilt mehrfach entlang von zylindrischen Kreisbögen die Filterelemente 21 angeordnet sein.

Die in der Zeichnung dargestellten Filterelemente 21 münden mit ihrem Einlassquerschnitt, also mit ihrer Eingangsöffnung 23 in zylindrisch entsprechend ausgebildete Ausnehmungen 24 des Zwischenbodens 7, sind also mit dem Raum 11, der das Unfiltrat enthält, in Fluidverbindung, so dass dieses für den Filtrationsvorgang in den inneren Filterhohlraum 25 oder Filterelemente 21 eintritt und bei der Filtrierung die Filterelemente 21 nach außen hin zur Reinseite 15 durchströmt. Beim Rückspülvorgang hingegen wird das jeweils abzureinigende Filterelement von der Reinseite 15 her von außen nach innen durchströmt. Über einen schwenkbeweglichen Rückspülarm 27, der den Anfang einer aus dem Filtergehäuse 1 heraus führenden Rückspülleitung 29 bildet, strömt das die abgereinigten Verschmutzungen enthaltende Schmutzfluid beim Rückspülvorgang über eine bodenseitige Abführöffnung 31 aus dem Filterelement 21 ab, das abgereinigt wird.

Der Rückspülarm 27 ist für seine Schwenkbewegung mittels eines Getriebemotors 33 über eine im Filtergehäuse 1 konzentrisch angeordnete Antriebswelleneinrichtung antreibbar, die einen oberen, an der Abtriebsseite des Getriebemotors 33 befestigten Wellenzapfen 35, eine hohle Zwischenwelle 37 und einen unteren, mit dem Rückspülarm 27 verbundenen Wellenzapfen 39 aufweist.

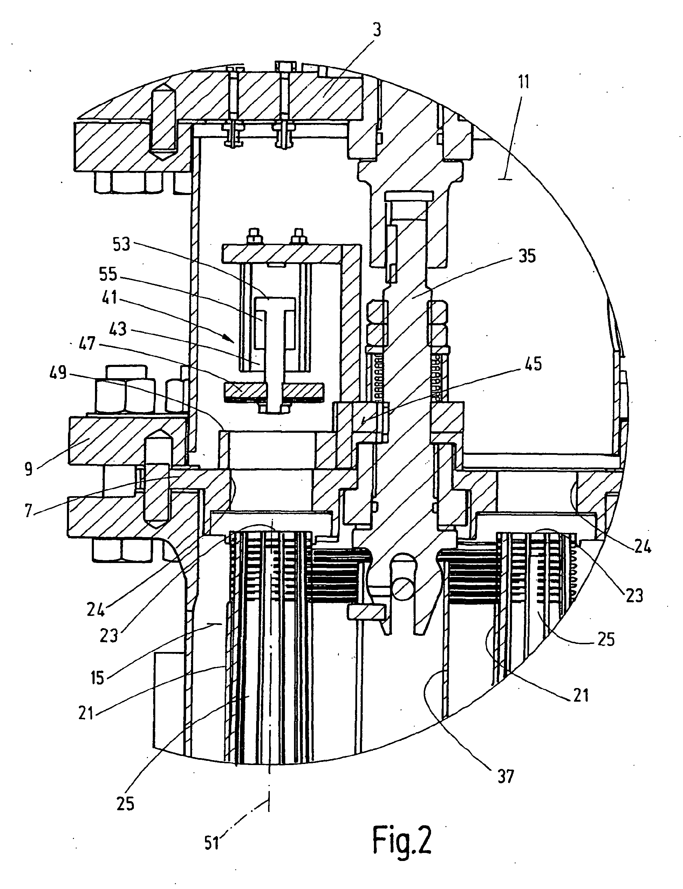

Der Getriebemotor 33 dient nicht nur zum Schwenken des Rückspülarmes 27, sondern bildet auch den Schwenkantrieb für ein Absperrelement 41, mittels dessen für einen Rückspülvorgang die Fluidverbindung zwischen dem Umfiltrat im Raum 11 und dem Filterhohlraum 25 des abzureinigenden Filterelementes 21 unterbindbar ist, indem dessen Eingangsöffnung 23 verschlossen wird. Die näheren diesbezüglichen Einzelheiten des ein Plattenventil 43 enthaltenden Absperrelementes 41 sind den Fig. 2 bis 4 deutlicher entnehmbar.

Wie aus diesen Figuren ersichtlich, befindet sich das Plattenventil 43 an einem Träger 45, der mit dem Wellenzapfen 35 verbunden ist, so dass der Getriebemotor 33 das Plattenventil 43 zusammen mit dem Rückspülarm 27 schwenkt. Bei der Darstellung in den Fig. sind Rückspülarm 27 und Plattenventil 43 mittels des Getriebemotors 33 in die Schwenkposition eingestellt, in der das in den Fig. linksseitig gelegene Filterelement 21 für einen Rückspülvorgang ausgewählt ist. Das Plattenventil 43 weist eine Ventilplatte 47 auf, die mit einem Ventilsitz 49 am Träger 45 zusammen wirkt. Für die entlang der Längsachse 51 erfolgende Schließbewegung zum Anlegen der Ventilplatte 47 und damit zum Sperren der Eingangsöffnung 23 des betreffenden Filterelementes 21 ist die Ventilplatte 47 mittels eines Hydrokolbens 53 bewegbar, der in einem mit dem Träger 45 verbundenen Hydrozylinder 55 geführt ist.

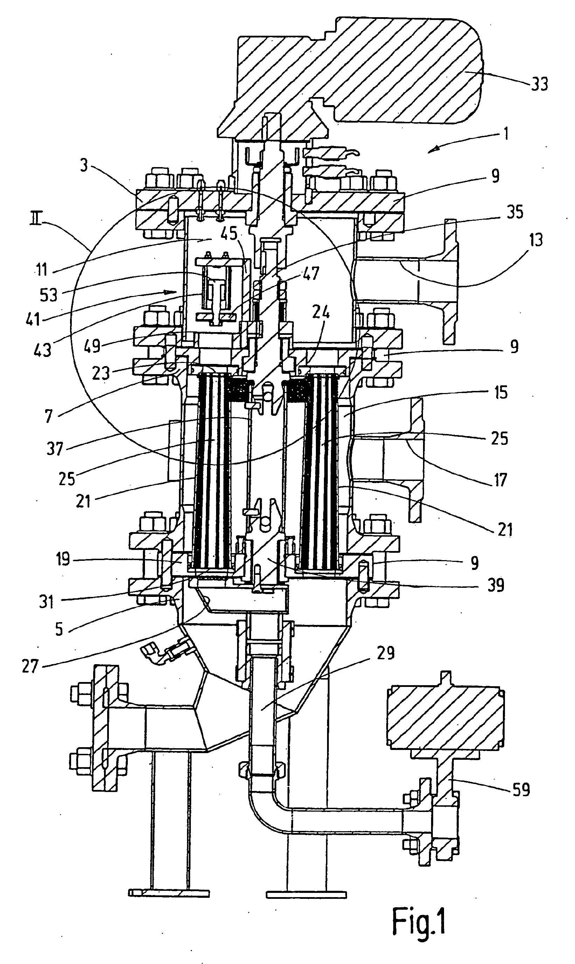

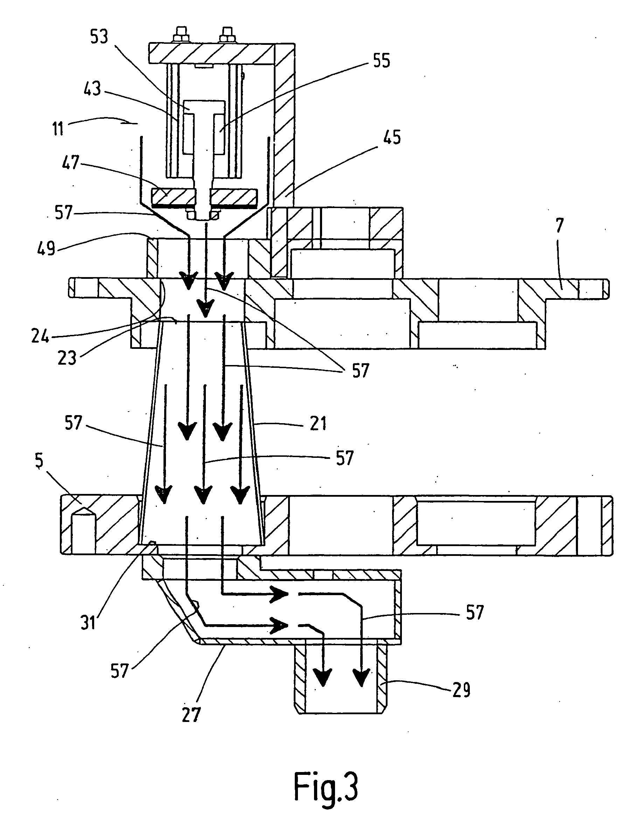

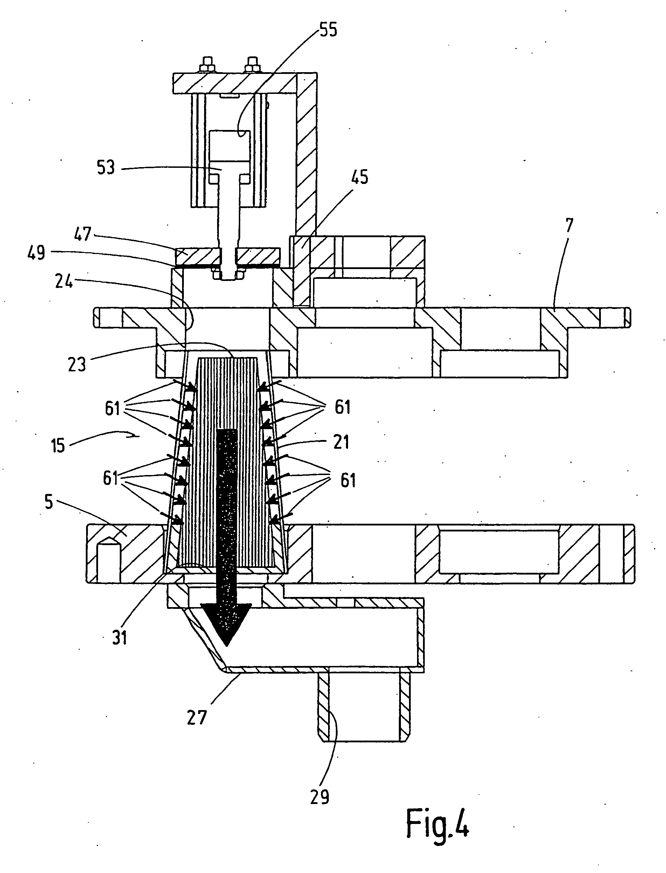

Zur Verdeutlichung der Funktionsweise wird insbesondere auf Fig. 3 und 4 Bezug genommen. Die Fig. 3 zeigt durch Strömungspfeile 57 (nicht sämtliche in der Fig. beziffert) den Verlauf der Fluidströmung bei dem für einen Rückspülvorgang ausgewählten Filterelement 21, auf dessen Eingangsöffnung 23 das Plattenventil 43 ausgerichtet ist und dessen Abführöffnung 31 mit dem Rückspülarm 27 in Verbindung ist. Dieser in Fig. 3 gezeigte Strömungszustand herrscht, wenn eine nur in Fig. 1 zu sehende Ventileinrichtung 59 die Rückspülleitung 29 freigibt und das Plattenventil 43 noch nicht geschlossen ist. Wenn nun, für den Rückspülvorgang, bei diesem Strömungszustand das Plattenventil 43 geschlossen wird, d. h. das Nachströmen von Unfiltrat aus dem Raum 11 in das Filterelement 21 hinein blokkiert wird, kommt es zur Strömungsumkehr am Filterelement 21. Aufgrund der Strömungsgeschwindigkeit des vom Raum 11 her das Filterelement 21 durchströmenden Unfiltrats (Zustand von Fig. 3) führt das Sperren des Plattenventils 43 zu einem negativen Druckschlag, wodurch sich eine Nachsaugwirkung ergibt, so dass für das mit den Strömungspfeilen 61 in Fig. 4 angedeutete Rückströmen in das Filterelement 21 von der Reinseite 15 her nicht nur der Systemdruck, sondern zusätzlich die Nachsaugwirkung durch das Sperren der Unfiltrat-Flüssigkeitssäule zur Verfügung steht. Durch die sich dadurch an den Durchtrittsstellen des Filtermediums einstellende Düsenwirkung werden selbst hartnäckigste Verschmutzungen vom Filtermedium abgelöst. Eine besonders starke Nachsaugwirkung tritt ein, wenn die Rückspülleitung 29 eine größere Länge besitzt, d. h. der Sperrvorgang an einer verhältnismäßig langen Fluidsäule entsprechender Strömungsgeschwindigkeiten erfolgt.

## Patentansprüche

1. Filtervorrichtung mit einer Mehrzahl von Filterelementen (21), die in einem Filtergehäuse (1) mit einem Filtereinlass (13) für ein zu filtrierendes Fluid und einem Filterauslass (17) für das gefilterte Fluid aufnehmbar sind, wobei die Filterelemente (21) für eine Filtration oder Rückspülung in beiden Richtungen durchströmbar sind, wobei gleichzeitig die einen Filterelemente (21) die Filtration vornehmen und zumindest ein anderes Filterelement (21) zum Abreinigen seiner wirksamen Filterfläche mittels einer Rückspüleinrichtung rückspülbar ist, die zur Unterstützung der Rückspülung eine Drucksteuereinrichtung beinhaltet, wobei die Drucksteuereinrichtung ein Absperrelement (41) aufweist, mittels dessen die Fluidverbindung zwischen Filtereinlass (13) und dem abzureinigenden Filterelement (21) sperrbar oder freigebbar ist, und wobei während der Filtration das Absperrelement (41) die Fluidverbindung freigibt und mit Beginn oder während der Rückspülung sperrt, **dadurch gekennzeichnet, dass** das Absperrelement (41) ein mittels eines Hydrokolbens (53) ansteuerbares, schnell schließendes Plattenventil (43) ist, das derart rasch die genannte Fluidverbindung sperrt, dass in der Art eines Druckschlages am rückgespülten Filterelement (21) eine Nachsaugwirkung entsteht, die die Abreinigung von Verschmutzungen am Filterelement (21) erhöht.

2. Filtervorrichtung nach Anspruch 1, **dadurch gekennzeichnet, dass** die Filterelemente (21) einen inneren Filterhohlraum (25) aufweisen, der eine Längsachse (51) definiert, die sich zwischen einer endseitigen, bei der Filtration mit dem Filtereinlass (13) verbundenen Eingangsöffnung (23) und einer dazu entgegengesetzten endseitigen Abführöffnung (31) erstreckt, über die beim Rückspülen verschmutztes Fluid abführbar ist, und dass die Eingangsöffnung (23) des abzureinigenden Filterelementes (21) für die Rückspülung mittels des Absperrelementes (41) sperrbar ist.

3. Filtervorrichtung nach Anspruch 1 oder 2, **dadurch gekennzeichnet, dass** mit vertikaler Längsachse (51) im Filtergehäuse (1) angeordnete Filterelemente (21) mit sich nach oben konisch verjüngender Gestalt vorgesehen sind.

4. Filtervorrichtung nach Anspruch 2 oder 3, **dadurch gekennzeichnet, dass** die Abführöffnung (31) des abzureinigenden Filterelementes (21) mit einer Rückspülleitung (29) verbindbar ist, die mittels einer Ventileinrichtung (59) wahlweise sperrbar und freigebbar ist.

5. Filtervorrichtung nach Anspruch 4, **dadurch gekennzeichnet, dass** die Rückspülleitung (29) eine Länge besitzt, die größer ist als die in Richtung der Längsachse (51) gemessene Länge der Filterelemente (21).

6. Filtervorrichtung nach einem der Ansprüche 2 bis 5, **dadurch gekennzeichnet, dass** die Rückspüleinrichtung einen bewegbaren, mittels einer Antriebseinrichtung (33) mit der Abführöffnung (31) des abzureinigenden Filterelementes (21) verbindbaren Rückspülarm (27) aufweist, und dass das Absperrelement (41) im Zuge der Bewegung des Rückspülarmes (27) mittels der Antriebseinrichtung (33) auf die Eingangsöffnung (23) des mit dem Rückspülarm (27) verbundenen Filterelementes (21) ausrichtbar ist, um den Fluideintritt in dessen Filterhohlraum (25) freizugeben oder zu sperren.

## Claims

1. A filter device having a plurality of filter elements (21) which can be received in a filter housing (1) with a filter inlet (13) for a fluid to be filtered and a filter outlet (17) for the filtered fluid, and flow can take place through the filter elements (21) for filtration or backflushing in both directions, at the same time some filter elements (21) undertaking filtration and at least one other filter element (21) can be backflushed for cleaning of its active filter surface by a backflushing means which contains a pressure control means for support of backflushing, the pressure control means having a blocking element (41) by means of which the fluid connection between the filter inlet (13) and the filter element (21) to be cleaned can be blocked or cleared, and during filtration the blocking element (41) clearing the fluid connection and blocking it with the start of backflushing or during it, **characterised in that** the blocking element (41) is a quick-closing plate valve (43) that can be triggered by means of a hydraulic piston (53) and which blocks the aforementioned fluid connection quickly such that in the manner of a hydraulic shock on the backflushed filter element (21) a feeding effect arises which increases the removal of dirt on the filter element (21).

2. The filter device according to Claim 1, **characterised in that** the filter elements (21) have an inner filter cavity (25) which defines a longitudinal axis (51) that extends between an end-side input opening (23) connected to the filter inlet (13) during filtration, and an end-side discharge opening (31) opposite the latter via which contaminated fluid can be discharged when backflushing, and that the input opening (23) of the filter element (21) to be cleaned for backflushing is blockable by means of the blocking element (41).

3. The filter device according to Claim 1, **characterised in that** there are filter elements (21) with a vertical longitudinal axis (51) disposed within the filter housing (1), with a shape that tapers conically upwards.

4. The filter device according to Claim 2 or 3, **characterised in that** the discharge opening (31) of the filter element (21) to be cleaned can be connected to a backflushing line (29) which can be alternately blocked or cleared by a valve means (59).

5. The filter device according to Claim 4, **characterised in that** the backflushing line (29) has a length that is greater than the length of the filter elements (21) measured in the direction of the longitudinal axis (51).

6. The filter device according to Claim 2, **characterised in that** the backflushing means has a movable backflushing arm (27) that can be connected by a drive means (33) to the discharge opening (31) of the filter element (21) to be cleaned, and that in the course of motion of the backflushing arm (27) the blocking element (41) can be aligned by the drive means (33) to the input opening (23) of the filter element (21) which is connected to the backflushing arm (27) in order to clear or block fluid entry into its filter cavity (25).

## Revendications

1. Dispositif de filtration, comprenant une multiplicité d'éléments (21) filtrants qui peuvent être logés dans un corps (1) de filtre ayant une entrée (13) de filtre pour un fluide à filtrer et une sortie (17) de filtre pour le fluide filtré, dans lequel les éléments (21) filtrants peuvent être traversés dans les deux sens pour une filtration ou pour un lavage en retour, dans lequel en même temps l'un des éléments (21) filtrants effectue la filtration et au moins un autre élément (21) filtrant peut être lavé en retour, au moyen d'un dispositif de lavage en retour, pour nettoyer sa surface filtrante efficace, le dispositif de lavage en retour comportant un dispositif de réglage de la pression pour assister le lavage en retour, dans lequel le dispositif de réglage de la pression comporte un élément (41) d'obturation, au moyen duquel la liaison fluidique entre l'entrée (13) du filtre et l'élément (21) filtrant à nettoyer peut être fermée ou peut être ouverte et dans lequel, pendant la filtration, l'élément (41) d'obturation ouvre la liaison fluidique et la ferme au début ou pendant le lavage en retour, **caractérisé en ce que** l'élément (41) d'obturation est une vanne (43) à plateau, qui peut être commandée au moyen d'un piston (53) hydraulique qui se ferme rapidement et qui ferme rapidement la liaison fluidique mentionnée, de manière à créer, à la manière d'un coup de bélier sur l'élément (21) filtrant lavé en retour, un effet de post-aspiration, qui améliore l'enlèvement des crasses sur l'élément (21) filtrant.

2. Dispositif de filtration suivant la revendication 1, **caractérisé en ce que** les éléments (21) filtrants ont une cavité (25) intérieure de filtre, qui définit un axe (51) longitudinal s'étendant entre une ouverture (23) d'entrée, du côté de l'extrémité et reliée lors de la filtration à l'entrée (13) du filtre, et une ouverture (31) d'évacuation, du côté de l'extrémité opposée à l'ouverture (23) d'entrée, ouverture (31) d'évacuation par laquelle le fluide encrassé, lors du lavage en retour, peut être évacué et **en ce que** l'ouverture (23) d'entrée de l'élément (21) filtrant à nettoyer peut, pour le lavage en retour, être fermée au moyen de l'élément (41) d'aspiration.

3. Dispositif de filtration suivant la revendication 1 ou 2, **caractérisé en ce qu'**il est prévu des éléments (21) filtrants disposés en ayant l'axe (51) longitudinal vertical dans le corps (1) du filtre et de forme se rétrécissant coniquement vers le haut.

4. Dispositif de filtration suivant la revendication 1, 2 ou 3, **caractérisé en ce que** l'ouverture (31) d'évacuation de l'élément (21) filtrant à nettoyer peut communiquer avec un conduit (29) de lavage en retour, qui peut être au choix fermé et ouvert, au moyen d'un dispositif (59) de vanne.

5. Dispositif de filtration suivant la revendication 4, **caractérisé en ce que** le conduit (29) de lavage en retour a une longueur qui est plus grande que la longueur des éléments (21) filtrants, mesurée dans la direction de l'axe (51) longitudinal.

6. Dispositif de filtration suivant l'une des revendications 2 à 5, **caractérisé en ce que** le dispositif de lavage en retour comporte un bras (27) de lavage en retour mobile et pouvant être relié au moyen d'un dispositif (33) d'entraînement à l'ouverture (31) d'évacuation de l'élément (21) filtrant à nettoyer, et **en ce que** l'élément (41) d'obturation peut être dirigé, au cours du déplacement du bras (27) de lavage en retour, au moyen du dispositif (33) d'entraînement, sur l'ouverture (23) d'entrée de l'élément (21) filtrant relié au bras (27) de lavage en retour, afin d'ouvrir ou de fermer l'entrée pour du fluide dans sa cavité (25) de filtre.
